(19) Europäisches Patentamt
European Patent Office
Office européen des brevets

(11) EP 3 617 642 A1

(12) EUROPEAN PATENT APPLICATION

(43) Date of publication:
04.03.2020 Bulletin 2020/10

(51) Int Cl.:
G01B 11/16 (2006.01)

(21) Application number: 18425072.8

(22) Date of filing: 31.08.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Agisco S.r.l.
20122 Milano (IT)

(72) Inventors:
• Robotti, Franco
20090 Segrate (MI) (IT)
• Arrigoni, Marco
23807 Merate (LC) (IT)

(54) **FIBER OPTIC EXTENSOMETER**

(57)    Fiber optic extensometer (100) for measuring deformations of an object that is subjected to a mechanical or thermal stress, characterized in that comprising:
- a measuring optical fiber (105), having length L1 and jointly connected to said object to be monitored, where the measuring optical fiber (105) is made of an elastic polymer, however being elastically deformable, being indirectly subject through connection to the same external stress of said object;
- a reference optical fiber (106), having length $L_2$ and having the same chemical-physical features of said measuring optical fiber (105), where the reference optical fiber (106) is completely independent and it is not subject to any external force;

- electronic means (102) generating a periodic signal (103) having an electromagnetic radiation as a carrier, preferably operating in the near infra-red frequencies; electronic means for splitting and transmitting (104) said periodic signal (103) simultaneously towards said measuring optical fiber (105) and said reference optical fiber (106); electronic means detecting the difference of phase (111) between a periodic signal (109) coming from the output port (107) of the measuring fiber (105) and a periodic signal (110) coming from the output port (108) of the reference fiber (106); electronic means for processing and calculation (101) of the mechanical or thermical deformation associated to the above said difference of phase (111).

Fig. 1

**Description**

The present invention belongs to the field of monitoring of structures, and regards a device called *extensometer* that comprises a standard optical fiber (that is not subject to a previous treatment as in example in the Bragg grating). A light signal is transmitted inside the fiber, and it is represented by periodic impulses working in the range of the near infra-red frequencies. This device is used to measure the deformation of objects and/or structures, and the smallest detected deformation is typically in the order of the micrometer over distances of one meter (1 $\mu$m = 1 $\times$ 10$^{-6}$ m). The invention further comprises some transmission systems commonly used in local area networks communications based on optical fiber, properly controlled in order to evaluate the elongation or shortening of a segment of optical fiber. The elongation or shortening in a optical fiber is proportional to the real deformation of the object or structure monitored.

Some devices known from the prior art there are the electrical extensometers, the vibrating string extensometers, and the fiber Bragg grating extensometers.

A first drawback in the known systems is that they use measuring devices working on a single point, therefore they require that material around the measuring point should be homogeneous. When the object under monitoring presents some irregularities (in example the inert materials have size in the order of the measuring sensor) then the performance of the instruments results to be very poor. The fiber Bragg grating devices present analogous installation difficulties for similar reasons.

A second drawback in the known systems is that some instruments are affected by external phoenomena, due in example to humidity and presence of water or electromagnetic fields. In order to overcome this problem, they are often modified and/or adapted, leading to consequences either on the precision level in the detected signal.

A third drawback, In the measuring method here disclosed, based on the detected difference of phase between two periodic signals transmitted in a optical fiber, is that:

- in the area of phase difference close to zero, the noise decreases the precision of the measurement;
- the differences respectively related to an elongation and a shortening that are close to zero have the same sign, therefore the measures are affected by an indetermination related to the type of deformation that have stressed the fiber.

The present invention overcomes all the above drawbacks, having as a main objective the disclosing of an optical fiber *extensometer,* measuring the deformations of an object that is subjected to mechanical or thermical stress, where the deformation detected is an average measure over a segment having length from some decimeters to few meters, making a significant difference in respect to the above described systems from the prior art, that evaluate the deformations absolutely and only locally.

Another objective of the present invention is that the sheathed optical fiber, as a measuring element, is deformable and presents, as a unique limit, the possibility of physical break by tearing, so that it results easy to be installed even by non qualified operators.

Another objective is that the same device is characterized by a significant detection speed; while the vibrating string sensors work at a frequency of few cycles per second (Hz) the present invention can reach a theorical level of 30 millions of cycles per second (MHz).

Another further objective is that, by using a method measuring the difference of phase between two periodic signals transmitted in an optical fiber, it is possible to adapt the instruments so that it is achieved a reference signal (R) and a measurement signal (M) that are initially shifted of $\pi/2$ or $(3/2)\pi$ each other, that represent working points in the instruments where the effects of a signal distorsion and noise are minimized.

Therefore, the present invention is different in respect to the known devices in that: no one of the them is able to detect a deformation on a very long distance; no one of them uses a standard optical fiber as that used in data transmission (the sensor is represented exactly by the fiber); no one of them uses a standard tranceiver (in example a *small form-factor pluggable transceiver*) in order to achieve a signal transmission and/or detection having the proper waveform used on the evaluation of the deformation; no one of them is adapted to operate in a working point where the effect of distorsion in signals are minimized.

Therefore, it is specific subject of the present invention a fiber optic extensometer for measuring deformations of an object that is subjected to a mechanical or thermal stress, characterized in that comprising:

- a measuring optical fiber, having length $L_1$ and jointly connected to said object to be monitored, where the measuring optical fiber is made of an elastic polymer, however being elastically deformable, being indirectly subject through connection to the same external stress of said object;
- a reference optical fiber, having length $L_2$ and having the same chemical-physical features of said measuring optical fiber, where the reference optical fiber is completely independent and it is not subject to any external force;

- electronic means generating a periodic signal having an electromagnetic radiation as a carrier, preferably operating in the near infra-red frequencies; electronic means for splitting and transmitting said periodic signal simultaneously towards said measuring optical fiber and said reference optical fiber; electronic means detecting the difference of phase between a periodic signal coming from the output port of the measuring fiber and a periodic signal coming from the output port of the reference fiber; electronic means for processing and calculation of the mechanical or thermical deformation associated to the above said difference of phase.

With reference to the known devices, the extensometer of the present invention is further characterized by a series of advantages, as in example:

- the possibility to evaluate the deformation over a long distance, not limiting to single local points, preventing incorrect signals and errors of measurement;
- it can be embedded as an inert element inside a structure or in a surrounding area in respect to a structure;
- in case of installation as an extensometer over a long distance, it permits to decrease the costs of installation for the measuring rods, for the reduction of the drilling diameters and for the better connection mechanism;
- it can be used with a geosynthetic material, permitting the measurement of deformation in the supporting elements, without any additional tools for a perfect anchorage;
- it permits the use of *standard* elements for data transmission, being very cheap, without the need to develop any new special hardware;
- the *chip* achieving a measurement of a difference of phase has a standard use in the mobile phone telecommunications; therefore, the costs are significantly lower in respect to a special hardware providing an optical or an interferometric demodulation.

The present invention will now be described for illustrative but not limitative purposes, according to its preferred embodiments, with particular reference to figures of the enclosed drawings, wherein:

**Figure 1** is a schematic view representing the main components of an fiber optic extensometer according to the present invention;
**Figure 2** is a view of a diagram representing two periodic sinusoidal functions having different respective phases;
**Figure 3** is a view of a diagram representing the output phase from the extensometer as a function of the phase difference related to two periodic signals, in a ideal case and in a real case;
**Figure 4** is a schematic view of the same fiber optic extensometer of the present invention, in a configuration where the optical fiber is wrapped on more rings;
**Figure 5** is a lateral schematic view of the input end in the optical fiber, belonging to the extensometer of the present invention, where it is shown in detail as a periodic signal is shaped approximating a squared wave;
**Figure 6** is a schematic view of two respective periodic signals shaped as a squared wave (A) and (B) that are multiplied each other to obtain the signal (C);
**Figure 7** is a lateral schematic view of the output end in the optical fiber, before and after application of an additional segment, useful to change the phase of the output signal in the optical fiber;
**Figure 8** is a lateral schematic view of a periodic signal shaped as a squared wave, before and after the increase of its wave length, useful to change the phase of the output signal in the optical fiber;
**Figure 9** is a schematic view of an Excel table that contains the parameters of a periodic signal shaped as a squared wave, in respective situations where its frequency f and length L of the optical fiber in which it is transmitted are changed.

It is here underlined that only few of the many conceivable embodiments of the present invention are described, which are just some specific non-limiting examples, having the possibility to describe many other embodiments based on the disclosed technical solutions of the present invention.

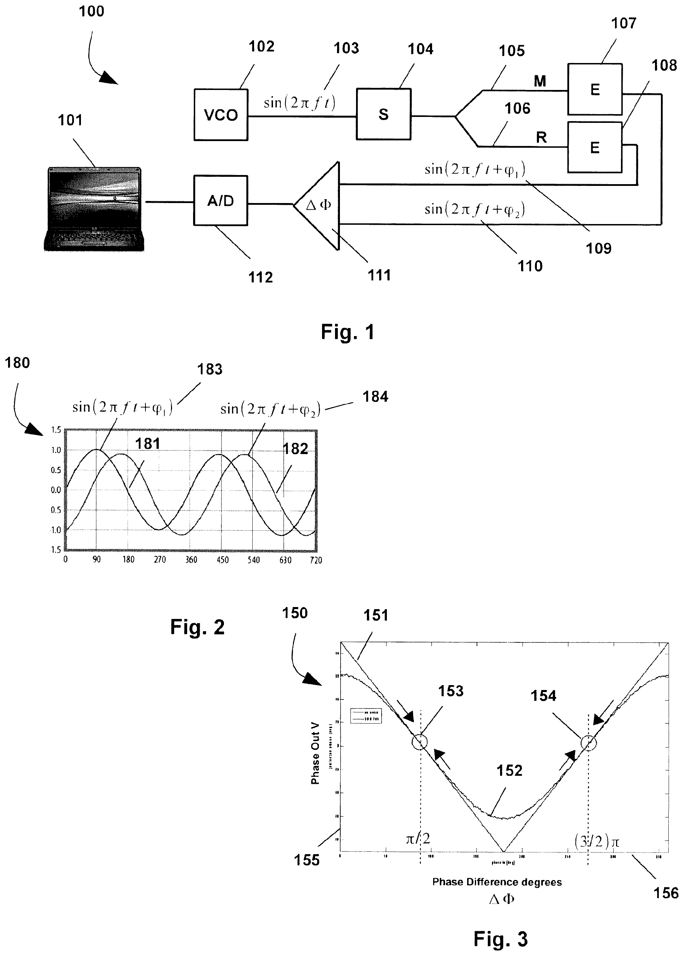

**Figure 1** shows a fiber optic extensometer **100,** according to the present invention, for measuring deformations of an object that is subjected to a mechanical or thermal stress. It comprises essentially a measuring optical fiber **105,** a reference optical fiber **106,** and electronic means for generation **102,** transmission **104,** detection **111** and processing **101** of periodic signals **103,** having an electromagnetic radiation as a carrier, preferably operating in the near infra-red frequencies.

The measuring optical fiber **105** has a length $L_1$ and it is jointly connected to said object to be monitored, where the same measuring optical fiber **105** is made of an elastic polymer, however being elastically deformable, being indirectly subject through connection to the same external stress of said object.

The reference optical fiber **106** has length $L_2$ and the same chemical-physical features of said measuring optical fiber **105,** where the reference optical fiber **106** is completely independent and it is not subject to any external force.

As represented in **Figure 1,** the electronic means **102** generate a periodic signal **103** having an electromagnetic radiation as a carrier, preferably operating in the near infra-red frequencies; the electronic means **104** split and transmit said periodic signal **103** simultaneously towards said measuring optical fiber **105** and said reference optical fiber **106;** the electronic means **111** detect the difference of phase between a periodic signal **109** coming from the output port **107** of the measuring fiber **105** and a periodic signal **110** coming from the output port **108** of the reference fiber **106;** the electronic means **101** process and calculate the mechanical or thermical deformation associated to the above said difference of phase **111.**

**Figure 2** shows an example of a diagram **180** related to two periodic functions **181, 182,** having different phase. In this case they are two sinusoidal functions defined by the respective mathematical formulas **183, 184.**

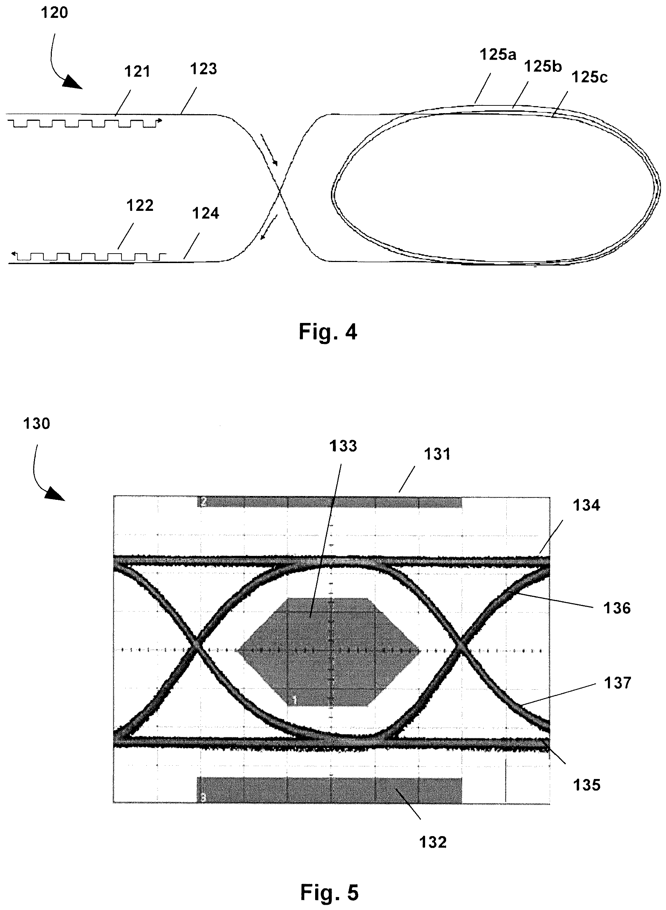

**Figure 5** shows the input end of an optical fiber **130,** where it is represented how a periodic signal **136** or **137** is shaped approximating a squared wave. Therefore, here following we refer to a case where the periodic signal is constituted by a periodic squared wave, that is generally defined by the following formula:

$$\psi_{\text{quadra}}(t) = \frac{4}{\pi} \sum_{k=1}^{\infty} \frac{\sin\left((2k-1)2\pi f t\right)}{(2k-1)}$$
$$= \frac{4}{\pi}\left(\sin(2\pi f t) + \frac{1}{3}\sin(6\pi f t) + \frac{1}{5}\sin(10\pi f t) + \cdots\right). \qquad (1)$$

In order to measure a difference of phase with a high precision, a high frequency *laser* pulsed light is injected in the fiber, that can be achieved by voltage controlled oscillators, or digitally controlled oscillators, easily available on the market of the standard telephone communication devices.

The injection and modulation of light into the fiber are achieved by using elements commonly used in local area networks communication based on optical fiber, as in example the so called SFP: *small form-factor pluggable transceiver,* https://en.wikipedia.org/wiki/Small_form-factor_pluggable_transceiver.

The difference of phase is obtained as an analogic signal from a specific integrated circuit, either commonly used in radio transmission instruments available in the field of mobile telecommunication networks.

The optical fiber can be of a polymeric type (*polymer optical fiber* - POF), so that it can be subjected to small traction, compression and deformation, without being damaged. The same optical fiber is jointly connected to an object to be monitored, as i.e. the front part of a building, the arc of a bridge, the span of an overpass, the wall of a dam, the profile of a gallery and/or similar structures. Therefore, this type of extensometer represents a useful instrument able to measure small deformations in an object that is subjected to a mechanical and/or thermal stress, as i.e. traction or compression expressed by an external load.

The working principle is based on the difference of distance travelled by the light inside an optical fiber: in case of traction the light travels for a longer distance, in case of compression the light travels for a shorter distance.

When a periodic signal having a known frequency f is injected inside a fiber having a refractive index n, in order to measure the length L travelled into the fiber, one could think to count trivially the number of wave lengths N detected at the output point.

$$L = \lambda N \qquad (2)$$

with $\lambda$ the wave length in the material and c the speed of light in the empty space:

$$\lambda = c/(n f) \qquad (3)$$

However, in practical applications it is important to detect and measure small variations in length, more than the absolute length of the fiber.

Therefore, considering $L_1$ being the initial length in the fiber, $L_2$ the length of the fiber under stress, $N_1$ the number of wave lengths detected at the output point at the initial situation, and $N_2$ the number of wave lengths detected under stress, it is obtained that a variation of length detected in the fiber would be equal to:

$$\Delta L = (L_2 - L_1) = \lambda(N_2 - N_1) = \lambda \Delta N \qquad (4)$$

As shown in **Figure 4,** the device of the present invention comprises an embodiment where said optical fiber **120** is closed as a ring, so that it is possible to decrease the size of the device and concentrate in a small area all the electronics related to generation, transmission, detection and processing of the optical signal. The closing on a ring of said optical fiber **120** or, its additional extension and rolling on more rings **125a, 125b, 125c,...,** permits to achieve the further result to increase the resolution of the extensometer **100**.

In example, when we would think to detect 0.1° in phase (1 part on 1800, that is probably a conservative estimate) on a wave length of 0.2 meters, that means to detect a traction of 200mm/3600 = 0.055 mm. A typical *strain gauge* has a resolution of 1 $\mu$m/m, that is 1 micron on a length of 1 meter. In this case, considering the way forward and back, the traction is double indeed, or the resolution is half: 0.055/2=0.0277. But, considering to increase the length to be travelled, by rolling up the fiber until it reaches a length of few dozens of meters, it can be seen how the sensitivity in the instrument could be increased significantly: having a 20 meters length it can be reached a resolution of 0.055/20 = 2,75 $\mu$m/m.

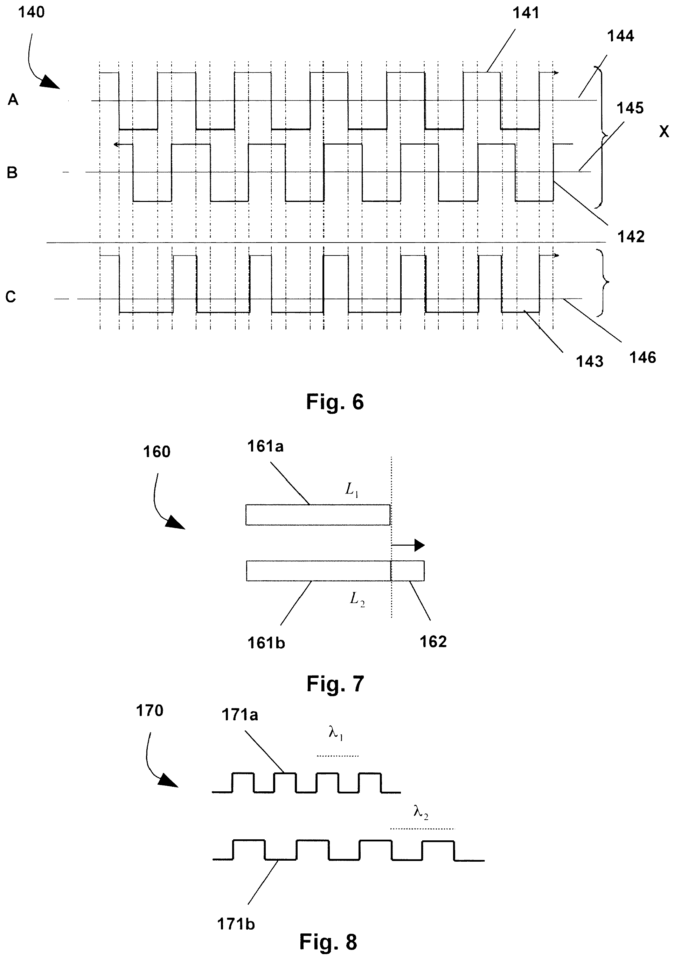

As above described already, and shown in **Figure 6,** the periodic signal transmitted in the optical fiber is shaped approximately as a squared wave.

In order to calculate the phase difference between a received squared wave **142** (B) in respect to a transmitted squared wave **141** (A), it can be emloyed an integrated circuit available on the market; the calculation is obtained by the following steps: it is provided a demodulation of signals **142** (A) and **141** (B), it is multiplied the received digital signal **142** (B) by the transmitted signal **141** (A), and it is calculated the local average **146** of the result **143** (C), that is function of the phase difference only. Considering a *duty cycle* of 50% for the transmitted wave, the local average **146** can therefore variate from a minimum of zero, representing the largest shift of $\pi/2$ (where the wave signals are in opposition of phase), to a maximum of 0.5 representing a perfect synchronism in the two wave signals.

This method of measurement presents two drawbacks:

- in the surrounding of a phase difference close to zero, the noise affects negatively the measure; on the opposite, by operating a demodulation of signals as shown in **Figure 3,** the closer is the phase difference to $\pi/2$ or $(3/2)\pi$, the more precise is the result of measurement;
- considering that the phase difference is calculated on an interval of $\pi$, shifts that are due to a traction or compression around a phase difference close to zero have the same sign, therefore there is a margin of uncertainty on the type of deformation to which the fiber has been subjected.

In order to overcome all the above drawbacks, it is possible to define a configuration in the device as that represented in **Figure 1,** and to adapt the instruments in order to have a reference signal **109** (R) and a measurement signal **110** (M), that have an initial difference of phase equal to $\pi/2$ or $(3/2)\pi$.

Therefore, it is achieved a starting working point in the instruments corresponding to a difference of phase equal to $\pi/2$ **153 or to** $(3/2)\pi$ **154.**

In order to shift the working point in the diagram of **Figure 3** and therefore shifting a signal in respect to the other, it is possible the intervention on two parameters:

- the fiber length $L$ : (see **Figure 7**) by addition of a physical segment of fiber (162) that shifts the general travelled path of a quarter of a wave length;
- the frequency $f$ in the signal: (see **Figure 8**) by decreasing the frequency, that is an increasing of the wave length, otherwise by increasing the frequency, that is a decreasing of the wave length, in order to calculate the wavelength that is associated to a predefined starting shift.

With reference to **Figure 3,** the device generates an analogic signal **152** that, at the odd half lengths of phase, increases by increasing the difference of phase **156,** instead at the even half lengths of phase, decreases by increasing the difference of phase **156.** Therefore, we could make the calculations in half length of waves, and could modify the frequency $f$ in the transmitted signal, or modify the length L in the fiber, in order to change the number of half wave lengths to the desired value.

With reference to the parameter $f$, it is possible to change the frequency generated by the electronic component **102** (VCO). With reference to the parameter $L$, it is possible to add a physical segment of fiber **162.**

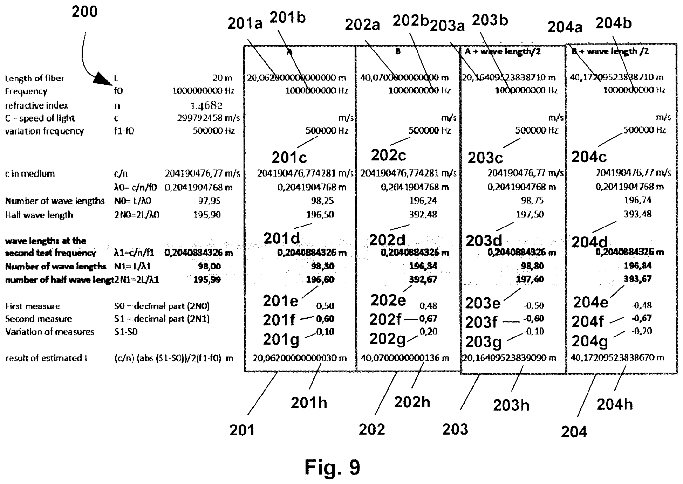

**Figure 9** shows an Excel table **200** that contains the parameters of a periodic signal shaped as a squared wave, in respective situations where the frequency $f$ and the length $L$ change, in the optical fiber where the same signal is transmitted.

In a first experiment the frequency f of the transmitted signal is changed, in order to shift the number of half wave lengths to a specific value.

In the column **201,** the parameters are represented for a first optical fiber having length $L_0$=20,062 (**201a**), instead In the column **202,** the parameters are represented for a second optical fiber having length $L_1$=40,07 (**202a**).

Given the first measure, a new measure is obtained related to two respective frequencies $f_0$ and $f_1$ in order to achieve a variation in the phase difference.

With reference to a periodic signal transmitted inside the first optical fiber, represented in column **201,** it is defined i.e. a first frequency $f_0$ = 1 GHz, **201b,** and a variation of frequency $(f_1 - f_0)$ = 500 KHz, **201c,** so that a second frequency $f_1$ = 1,0005 GHz is achieved.

By using the previous formulas (2) and (3) it is calculated the number of wave lengths detected at the output point $N_0$ = 98,25 and $N_1$ = 98,30, as a function of the respective frequencies $f_0$ and $f_1$, and therefore the number of respective half wave lengths, that are $2N_0$ = 196,50 , **201d,** and $2N_1$ = 196,60 , **201e,** for the first fiber.

Then it is calculated the cardinality of the wave lengths, that could be odd or even: if it is odd then the phase difference increases, if it is even then the phase difference decreases. Then it is calculated:

$$S_0 = mod(2N_0) = mod\left(\frac{2L\,n\,f_0}{c}\right) \qquad (5)$$

$$S_1 = mod(2N_1) = mod\left(\frac{2L\,n\,f_1}{c}\right) \qquad (6)$$

Therefore, if $S_1 > S_0$ then the number of half wave lengths is odd, otherwise it is even. In this case, i.e. $S_0$ = 0,50 , **201f,** and $S_1$ = 0,60 , **201g,** then $S_1 > S_0$, that means that the number of half wave lengths is odd, and the analogic signal **152** (**Figure 3**) is increasing by increasing the phase difference **156.** An estimate of the effective length (expressed by using meters) is given by the following formula:

$$\tilde{L} = \frac{(c/n)(|S_1 - S_0|)}{2(f_1 - f_0)} \qquad (7)$$

therefore, in this case: $\tilde{L}$=20,0620000000030, (**201h**).

With reference to a periodic signal transmitted inside the second optical fiber, represented in column **202,** it is defined i.e. a first frequency $f_0$ = 1 GHz , **202b,** and a variation of frequency $(f_1 - f_0)$ = 500 KHz , **202c,** so that a second frequency $f_1$ = 1,0005 GHz is achieved.

By using the previous formulas (2) and (3) it is calculated the number of wave lengths detected at the output point $N_0$ = 196,24 and $N_1$ = 196,34, as a function of the respective frequencies $f_0$ and $f_1$, and therefore the number of respective half wave lengths, that are $2N_0$ = 392,48 , **202d,** and $2N_1$ = 392,68 , **202e,** for the second fiber.

Then it is calculated the cardinality of the wave lengths, that could be odd or even: if it is odd then the phase difference increases, if it is even then the phase difference decreases. Then it is calculated by using the previous formulas (5) and (6), $S_0$ = 0,48 , **202f,** and $S_1$ = 0,67 , **202g.**

Therefore, it results to be $S_1 > S_0$ and that means that the number of half wave lengths is odd, and the analogic signal **152** (**Figure 3**) is increasing by increasing the phase difference **156.** An estimate of the effective length (expressed by using meters) is given by the previous formula (7): $\tilde{L}$=40,0700000000136 (**202h**).

In a second experiment the length of the fiber L is changed, in order to shift the number of half wave lengths to a specific value.

In particular, a segment of fiber, having length of approximately half wave length, is added to the first fiber represented by column **201** in order to achieve the third fiber represented by column **203,** and a segment of fiber, having length of approximately half wave length, is added to the second fiber represented by column **202** in order to achieve the fourth fiber represented by column **204.**

In this way, if the working point was previously in the increasing part of the diagram of **Figure 3** then it is shifted to the decreasing part, and if the working point was previously in the decreasing part of the diagram then it is shifted to the increasing part.

In the column **203,** the parameters are represented for a third optical fiber having length $L_0$=20,16409523838710 (**203a**), instead In the column **204,** the parameters are represented for a fourth optical fiber having length $L_1$=40,17209523838710 (**204a**). Given the first measure, a new measure is obtained related to two respective frequencies $f_0$ and $f_1$ in order to achieve a variation in the phase difference.

With reference to a periodic signal transmitted inside the third optical fiber, represented in column **203,** it is defined i.e. a first frequency $f_0$ = 1 GHz , **203b,** and a variation of frequency $(f_1 - f_0)$ = 500 KHz , **203c,** so that a second frequency $f_1$ = 1,0005 GHz is achieved.

By using the previous formulas (2) and (3) it is calculated the number of wave lengths detected at the output point $N_0$ = 98,75 and $N_1$ = 98,80, as a function of the respective frequencies $f_0$ and $f_1$ , and therefore the number of respective half wave lengths, that are $2N_0 = 197,50$ , **203d,** and $2N_1 = 197,60$ , **203e,** for the third fiber.

Then it is calculated the cardinality of the wave lengths, that could be odd or even: if it is odd then the phase difference increases, if it is even then the phase difference decreases. Then it is calculated by using the previous formulas (5) and (6), $S_0 = -0,50$ **203f,** and $S_1 = -0,60$, **203g.**

Therefore, it results to be $S_1 < S_0$ and that means that the number of half wave lengths is even, and the analogic signal **152** (**Figure 3**) is decreasing by increasing the phase difference **156.** An estimate of the effective length (expressed by using meters) is given by the previous formula (7): $\tilde{L}=20,16409523839090$ (**203h**).

With reference to a periodic signal transmitted inside the fourth optical fiber, represented in column **204,** it is defined i.e. a first frequency $f_0 = 1$ GHz , **204b,** and a variation of frequency $(f_1 - f_0) = 500$ KHz , **204c,** so that a second frequency $f_1 = 1,0005$ GHz is achieved.

By using the previous formulas (2) and (3) it is calculated the number of wave lengths detected at the output point $N_0 = 196,74$ and $N_1 = 196,84$, as a function of the respective frequencies $f_0$ and $f_1$, and therefore the number of respective half wave lengths, that are $2N_0 = 393,48$ , **204d,** and $2N_1 = 393,68$ , **204e,** for the fourth fiber.

Then it is calculated the cardinality of the wave lengths, that could be odd or even: if it is odd then the phase difference increases, if it is even then the phase difference decreases. Then it is calculated by using the previous formulas (5) and (6), $S_0 = -0,48$ , **204f,** e $S_1 = -0,67$ , **204g.**

Therefore, it results to be $S_1 < S_0$ and that means that the number of half wave lengths is even, and the analogic signal **152** (**Figure 3**) is decreasing by increasing the phase difference **156.** An estimate of the effective length (expressed by using meters) is given by the previous formula (7): $\tilde{L}=40,17209523838670$ (**204h**).

Therefore, the above examples show that the present invention achieves all the proposed objectives. In particular, it permits to obtain an optical fiber *extensometer,* measuring the deformations of an object that is subjected to mechanical or thermical stress, where the deformation detected is an average measure over a segment having length from some decimeters to few meters, making a significant difference in respect to the above described systems from the prior art, that evaluate the deformations absolutely and only locally.

Further according to the invention, the sheathed optical fiber, as a measuring element, is deformable and presents, as a unique limit, the possibility of a physical break by tearing, so that it results easy to be installed even by non qualified operators.

Furthermore, the same device is characterized by a significant detection speed; while the vibrating string sensors work at a frequency of few cycles per second (Hz) the present invention can reach a theorical level of 30 millions of cycles per second (MHz).

Further according to the invention, by using a method measuring the difference of phase between two periodic signals transmitted in an optical fiber, it is possible to adapt the instruments so that it is achieved a reference signal (R) and a measurement signal (M) that are initially shifted of $\pi/2$ or $(3/2)\pi$ each other, that represent working points in the instruments where the effects of a signal distorsion and noise are minimized.

The present invention has been described for illustrative but not limiting purposes, according to its preferred embodiments, but it is clear that modifications and/or changes can be introduced by those skilled in the art without departing from the relevant scope, as defined in the enclosed claims.

**Claims**

**1.**  Fiber optic extensometer (100) for measuring deformations of an object that is subjected to a mechanical or thermal stress, **characterized in that** comprising:

- a measuring optical fiber (105), having length $L_1$ and jointly connected to said object to be monitored, where the measuring optical fiber (105) is made of an elastic polymer, however being elastically deformable, being indirectly subject through connection to the same external stress of said object;
- a reference optical fiber (106), having length $L_2$ and having the same chemical-physical features of said measuring optical fiber (105), where the reference optical fiber (106) is completely independent and it is not subject to any external force;
- electronic means (102) generating a periodic signal (103) having an electromagnetic radiation as a carrier, preferably operating in the near infra-red frequencies; electronic means for splitting and transmitting (104) said periodic signal (103) simultaneously towards said measuring optical fiber (105) and said reference optical fiber (106); electronic means detecting the difference of phase (111) between a periodic signal (109) coming from the output port (107) of the measuring fiber (105) and a periodic signal (110) coming from the output port (108) of the reference fiber (106); electronic means for processing and calculation (101) of the mechanical or thermical deformation associated to the above said difference of phase (111).

2. Fiber optic extensometer (100) for measuring deformations of an object that is subject to a mechanical or thermal stress, according to previous claim .1, **characterized in that** said periodic signal (103) is represented by a signal approximating a squared wave or by a squared wave, that is generally defined by the following formula:

$$\psi_{quadra}(t) = \frac{4}{\pi} \sum_{k=1}^{\infty} \frac{\sin\left((2k-1)2\pi ft\right)}{(2k-1)}$$
$$= \frac{4}{\pi} \left( \sin(2\pi ft) + \frac{1}{3}\sin(6\pi ft) + \frac{1}{5}\sin(10\pi ft) + \cdots \right). \tag{1}$$

3. Fiber optic extensometer (100) for measuring deformations of an object that is subject to a mechanical or thermal stress, according to previous claim 2, **characterized in that** said generating electronic means (102) are composed of a *laser* device able to generate a high frequency pulsed light, that can be achieved by voltage controlled oscillators, or digitally controlled oscillators, easily available on the market of the standard telephone communication devices.

4. Fiber optic extensometer (100) for measuring deformations of an object that is subject to a mechanical or thermal stress, according to one or more of previous claims, **characterized in that** said electronic means for splitting and transmitting (104) said periodic signal (103) are composed of elements commonly used in local area networks communication based on optical fiber, as in example the so called SFP: *small form-factor pluggable transceiver.*

5. Fiber optic extensometer (100) for measuring deformations of an object that is subject to a mechanical or thermal stress, according to one or more of previous claims, **characterized in that** said electronic means detecting the difference of phase (111) are composed of a specific integrated circuit, either commonly used in radio transmission instruments available in the field of mobile telecommunication networks.

6. Fiber optic extensometer (100) for measuring deformations of an object that is subject to a mechanical or thermal stress, according to one or more of previous claims, **characterized in that**:

   - said measuring optical fiber (105) and said reference optical fiber (106) have a refractive index equal to *n*;
   - said periodic signal (103) has a define frequency *f*,
   - the length L travelled inside the fiber is related to the number of wave lengths N detected at the output point according to the following formula:

$$L = \lambda N \tag{2}$$

   with $\lambda$ the wave length in the material and c the speed of light in the empty space:

$$\lambda = c/(nf) \tag{3}$$

7. Fiber optic extensometer (100) for measuring deformations of an object that is subject to a mechanical or thermal stress, according to previous claim 6, **characterized in that**:

   - a variation of length detected in the fiber is equal to:

$$\Delta L = (L_2 - L_1) = \lambda(N_2 - N_1) = \lambda \Delta N \tag{4}$$

   with $L_1$ being the initial length in the fiber, $L_2$ the length of the fiber under stress, $N_1$ the number of wave lengths detected at the output point at the initial situation, and $N_2$ the number of wave lengths detected under stress.

8. Fiber optic extensometer (100) for measuring deformations of an object that is subject to a mechanical or thermal stress, according to one or more of previous claims, **characterized in that**:

   - said measuring optical fiber (105) and said reference optical fiber (106) are closed as a ring, so that it is possible to decrease the size of the device and concentrate in a small area all the electronics related to generation, transmission, detection and processing of the optical signal; the closing on a ring of said measuring optical fiber (105) and said reference optical fiber (106) or, their additional extension and rolling on more rings (125a, 125b, 125c,...) permits to achieve the further result to increase the resolution of the extensometer (100).

9.  Fiber optic extensometer (100) for measuring deformations of an object that is subject to a mechanical or thermal stress, according to one or more of previous claims from 2 to 7, **characterized in that**:

- in order to calculate the phase difference between a received squared wave (142)(B) in respect to a transmitted squared wave (141)(A), it can be emloyed an integrated circuit available on the market, where typically: it is provided a demodulation of signals (142) (A) and (141) (B), it is multiplied the received digital signal (142) (B) by the transmitted signal (141) (A), and it is calculated the local average (146) of the result (143) (C), that is function of the phase difference only; considering a *duty cycle* of 50% for the transmitted wave, the local average (146) can therefore variate from a minimum of zero, representing the largest shift of $\pi/2$ where the wave signals are in opposition of phase, to a maximum of 0.5 representing a perfect synchronism in the two wave signals.

10.  Fiber optic extensometer (100) for measuring deformations of an object that is subject to a mechanical or thermal stress, according to one or more of previous claims from 2 to 9, **characterized in that**:

- it is achieved a starting working point in the instruments corresponding to a phase difference between said reference signal (109)(R) and said measurement signal (110)(M) equal to $\pi/2$ (153) or to $(3/2)\pi$ (154), in order to shift the working point in the diagram of Figure 3 and therefore shifting a signal in respect to the other, by intervention on two possible parameters:

- the fiber length *L* : by addition of a physical segment of fiber (162) that shifts the general travelled path of a quarter of a wave length;
- the frequency *f* in the signal: by decreasing the frequency, that is an increasing of the wave length, otherwise by increasing the frequency, that is a decreasing of the wave length, in order to calculate the wavelength that is associated to a predefined starting shift;

with reference to the parameter *f*, it is possible to change the frequency generated by the electronic component (102) (VCO); with reference to the parameter *L*, it is possible to add a physical segment of fiber (162).

11.  Fiber optic extensometer (100) for measuring deformations of an object that is subject to a mechanical or thermal stress, according to previous claim 10, **characterized in that**: the frequency *f* of the transmitted signal is changed, in order to shift the number of half wave lengths to a specific value;

- given the first measure, a new measure is obtained related to two respective frequencies $f_0$ and $f_1$ in order to achieve a variation in the phase difference;

with reference to a periodic signal transmitted inside a first optical fiber, represented in column (201), having i.e. a length $L_0$=20,062 (201a), it is defined i.e. a first frequency $f_0$ = 1 GHz (201b) and a variation of frequency $(f_1 - f_0)$ = 500 KHz (201c), so that a second frequency $f_1$ = 1,0005 GHz is achieved;
by using the previous formulas (2) and (3) it is calculated the number of wave lengths detected at the output point $N_0$ = 98,25 and $N_1$ = 98,30, as a function of the respective frequencies $f_0$ and $f_1$ , and therefore the number of respective half wave lengths, that are $2N_0$ = 196,50 (201d) and $2N_1$ = 196,60 (201e) for the first fiber;
then it is calculated the cardinality of the wave lengths, that could be odd or even: if it is odd then the phase difference increases, if it is even then the phase difference decreases; then it is calculated:

$$S_0 = mod\left(2N_0\right) = mod\left(\frac{2L\,n\,f_0}{c}\right) \tag{5}$$

$$S_1 = mod\left(2N_1\right) = mod\left(\frac{2L\,n\,f_1}{c}\right) \tag{6}$$

Therefore, if $S_1 > S_0$ then the number of half wave lengths is odd, otherwise it is even; in this case, i.e. $S_0$ = 0,50 (201f) and $S_1$ = 0,60 (201g), then $S_1 > S_0$, that means that the number of half wave lengths is odd, and the analogic signal (152) is increasing by increasing the phase difference (156); an estimate of the effective length, expressed by using meters, is given by the following formula:

$$\tilde{L} = \frac{(c/n)(|S_1 - S_0|)}{2(f_1 - f_0)} \qquad (7)$$

therefore, in this case: $\tilde{L} = 20{,}0620000000030$ (201h).

12. Fiber optic extensometer (100) for measuring deformations of an object that is subject to a mechanical or thermal stress, according to previous claim 11, **characterized in that**: the frequency $f$ of the transmitted signal is changed, in order to shift the number of half wave lengths to a specific value;

- given the first measure, a new measure is obtained related to two respective frequencies $f_0$ and $f_1$ in order to achieve a variation in the phase difference;

with reference to a periodic signal transmitted inside a second optical fiber, represented in column (202), having i.e. a length $L_1 = 40{,}07$ (202a), it is defined i.e. a first frequency $f_0 = 1$ GHz (202b) and a variation of frequency $(f_1 - f_0) = 500$ KHz (202c), so that a second frequency $f_1 = 1{,}0005$ GHz is achieved;
by using the previous formulas (2) and (3) it is calculated the number of wave lengths detected at the output point $N_0 = 196{,}24$ and $N_1 = 196{,}34$, as a function of the respective frequencies $f_0$ and $f_1$, and therefore the number of respective half wave lengths, that are $2N_0 = 392{,}48$ (202d) and $2N_1 = 392{,}68$ (202e) for the second fiber;
then it is calculated the cardinality of the wave lengths, that could be odd or even: if it is odd then the phase difference increases, if it is even then the phase difference decreases; then it is calculated by using the previous formulas (5) and (6), $S_0 = 0{,}48$ (202f) and $S_1 = 0{,}67$ (202g);
therefore, it results to be $S_1 > S_0$ and that means that the number of half wave lengths is odd, and the analogic signal (152) is increasing by increasing the phase difference (156); an estimate of the effective length, expressed by using meters, is given by the previous formula (7): $\tilde{L} = 40{,}0700000000136$ (202h).

13. Fiber optic extensometer (100) for measuring deformations of an object that is subject to a mechanical or thermal stress, according to previous claim 11, **characterized in that**: the length $L$ of the fiber is changed, in order to shift the number of half wave lengths to a specific value;

- a segment of fiber, having length of approximately half wave length, is added to the first fiber represented by column (201) in order to achieve the third fiber represented by column (203), so that if the working point was previously in the increasing part of the diagram of Figure 3 then it is shifted to the decreasing part, in the same way, if the working point was previously in the decreasing part of the diagram then it is shifted to the increasing part;
- given the first measure, a new measure is obtained related to two respective frequencies $f_0$ and $f_1$ in order to achieve a variation in the phase difference;

with reference to a periodic signal transmitted inside the third optical fiber, represented in column (203), having i.e. a length $L_0 = 20{,}16409523838710$ (203a), it is defined i.e. a first frequency $f_0 = 1$ GHz (203b) and a variation of frequency $(f_1 - f_0) = 500$ KHz (203c), so that a second frequency $f_1 = 1{,}0005$ GHz is achieved;
by using the previous formulas (2) and (3) it is calculated the number of wave lengths detected at the output point $N_0 = 98{,}75$ and $N_1 = 98{,}80$, as a function of the respective frequencies $f_0$ and $f_1$, and therefore the number of respective half wave lengths, that are $2N_0 = 197{,}50$ (203d) and $2N_1 = 197{,}60$ (203e) for the third fiber;
then it is calculated the cardinality of the wave lengths, that could be odd or even: if it is odd then the phase difference increases, if it is even then the phase difference decreases; then it is calculated by using the previous formulas (5) and (6), $S_0 = -0{,}50$ (203f) and $S_1 = -0{,}60$ (203g);
therefore, it results to be $S_1 < S_0$ and that means that the number of half wave lengths is even, and the analogic signal (152) is decreasing by increasing the phase difference (156); an estimate of the effective length, expressed by using meters, is given by the previous formula (7): $\tilde{L} = 20{,}16409523839090$ (203h).

14. Fiber optic extensometer (100) for measuring deformations of an object that is subject to a mechanical or thermal stress, according to previous claim 12, **characterized in that**: the length L of the fiber is changed, in order to shift the number of half wave lengths to a specific value;

- a segment of fiber, having length of approximately half wave length, is added to the second fiber represented by column (202) in order to achieve the fourth fiber represented by column (204), so that if the working point was previously in the increasing part of the diagram of Figure 3 then it is shifted to the decreasing part, in the same way, if the working point was previously in the decreasing part of the diagram then it is shifted to the increasing part;

- given the first measure, a new measure is obtained related to two respective frequencies $f_0$ and $f_1$ in order to achieve a variation in the phase difference;

with reference to a periodic signal transmitted inside the fourth optical fiber, represented in column (204), having i.e. a length $L_1$=40,17209523838710 (204a), it is defined i.e. a first frequency $f_0$ = 1 GHz (204b) and a variation of frequency $(f_1 - f_0)$ = 500 KHz (204c), so that a second frequency $f_1$ = 1,0005 GHz is achieved;

by using the previous formulas (2) and (3) it is calculated the number of wave lengths detected at the output point $N_0$ = 196,74 and $N_1$ = 196,84, as a function of the respective frequencies $f_0$ and $f_1$ , and therefore the number of respective half wave lengths, that are $2N_0$ = 393,48 (204d) and $2N_1$ = 393,68 (204e) for the fourth fiber;

then it is calculated the cardinality of the wave lengths, that could be odd or even: if it is odd then the phase difference increases, if it is even then the phase difference decreases; then it is calculated by using the previous formulas (5) and (6), $S_0$ = -0,48 (204f) e $S_1$ = -0,67 (204g);

therefore, it results to be $S_1 < S_0$ and that means that the number of half wave lengths is even, and the analogic signal (152) is decreasing by increasing the phase difference (156); an estimate of the effective length, expressed by using meters, is given by the previous formula (7): $\tilde{L}$=40,17209523838670 (204h).

**Fig. 1**

**Fig. 2**

**Fig. 3**

**Fig. 4**

**Fig. 5**

Fig. 6

Fig. 7

Fig. 8

**200**

| | | | A (201) | B (202) | A + wave length/2 (203) | B + wave length/2 (204) |
|---|---|---|---|---|---|---|
| Length of fiber | L | 20 m | 20,062000000000000 m | 40,0700800000000 m | 20,16409523838710 m | 40,17209523838710 m |
| Frequency | f0 | 1000000000 Hz | 1000000000 Hz | 1000000000 Hz | 1000000000 Hz | 1000000000 Hz |
| refractive index | n | 1,4682 | | | | |
| C - speed of light | c | 299792458 m/s | m/s | m/s | m/s | m/s |
| variation frequency | f1-f0 | 500000 Hz | 500000 Hz | 500000 Hz | 500000 Hz | 500000 Hz |
| c in medium | c/n | 204190476,77 m/s | 204190476,774281 m/s | 204190476,774281 m/s | 204190476,77 m/s | 204190476,77 m/s |
| | λ0= c/n/f0 | 0,2041904768 m | 0,2041904768 m | 0,2041904768 m | 0,2041904768 m | 0,2041904768 m |
| Number of wave lengths | N0= L/λ0 | 97,95 | 98,25 | 196,24 | 98,75 | 196,74 |
| Half wave length | 2N0=2L/λ0 | 195,90 | 196,50 | 392,48 | 197,50 | 393,48 |
| wave lengths at the second test frequency | λ1=c/n/f1 | 0,2040884326 m | 0,2040884326 m | 0,2040884326 m | 0,2040884326 m | 0,2040884326 m |
| Number of wave lengths | N1= L/λ1 | 98,00 | 98,30 | 196,34 | 98,80 | 196,84 |
| number of half wave lengt | 2N1=2L/λ1 | 195,99 | 196,60 | 392,67 | 197,60 | 393,67 |
| First measure | S0 = decimal part (2N0) | | 0,50 | 0,48 | -0,50 | -0,48 |
| Second measure | S1 = decimal part (2N1) | | 0,60 | 0,67 | -0,60 | -0,67 |
| Variation of measures | S1-S0 | | 0,10 | 0,20 | -0,10 | -0,20 |
| result of estimated L | (c/n) (abs (S1-S0))/2(f1-f0) m | | 20,06200000000030 m | 40,0700000000136 m | 20,16409523839090 m | 40,17209523838670 m |

201a  201b      202a  202b 203a  203b      204a  204b

201c  202c  203c  204c

201d  202d  203d  204d

201e  202e  203e  204e

201f  202f  203f  204f

201g  202g  203g  204g

201h  202h  203h  204h

201  202  203  204

**Fig. 9**

Europäisches Patentamt

European Patent Office

Office européen des brevets

## EUROPEAN SEARCH REPORT

Application Number

EP 18 42 5072

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | US 2016/327442 A1 (JANSE VAN VUUREN DAWID Z [DE] ET AL) 10 November 2016 (2016-11-10) * paragraphs [0001] - [0004], [0017] - [0025]; figures 1,2,8 * ----- | 1-14 | INV. G01B11/16 |
| X | EP 1 847 811 A1 (FONDAZIONE TORINO WIRELESS [IT]; IST SUPERIORE MARIO BOELLA [IT]; TORI) 24 October 2007 (2007-10-24) * paragraphs [0029] - [0035]; figure 1 * ----- | 1-14 | |
| X | US 4 671 659 A (REMPT RAYMOND D [US] ET AL) 9 June 1987 (1987-06-09) * abstract; figures 1,2 * * column 3, lines 6-54 * ----- | 1-14 | |

**TECHNICAL FIELDS SEARCHED (IPC)**

G01B

The present search report has been drawn up for all claims

| Place of search | Date of completion of the search | Examiner |
|---|---|---|
| Munich | 7 January 2019 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 42 5072

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2019

| Patent document cited in search report | | Publication date | Patent family member(s) | | Publication date |
|---|---|---|---|---|---|
| US 2016327442 | A1 | 10-11-2016 | NONE | | |
| EP 1847811 | A1 | 24-10-2007 | AT | 487116 T | 15-11-2010 |
| | | | CN | 101059333 A | 24-10-2007 |
| | | | EP | 1847811 A1 | 24-10-2007 |
| | | | ES | 2354946 T3 | 21-03-2011 |
| | | | US | 2007253000 A1 | 01-11-2007 |
| US 4671659 | A | 09-06-1987 | NONE | | |

EPO FORM P0459

For more details about this annex : see Official Journal of the European Patent Office, No. 12/82